# EUROPEAN PATENT SPECIFICATION

(11) **EP 3 932 667 B1**
(45) Date of publication and mention of the grant of the patent: **07.08.2024**
(21) Application number: 20762689.6
(22) Date of filing: 06.02.2020
(51) Int. Cl.: B41M 5/42, B41M 5/44

(54) **THERMAL TRANSFER SHEET**
WÄRMEÜBERTRAGUNGSFOLIE
FEUILLE DE TRANSFERT THERMIQUE

(30) Priority: 26.02.2019 JP 2019033205
(43) Date of publication of application: 05.01.2022
(73) Proprietor: Dai Nippon Printing Co., Ltd., Tokyo 162-8001 (JP)
(72) Inventor: MATSUBA Emi, Tokyo 162-8001 (JP); OOTA Mitsuhiro, Tokyo 162-8001 (JP); EGUCHI Hiroshi, Tokyo 162-8001 (JP)
(74) Representative: Cabinet Beau de Loménie
(86) International application number: PCT/JP2020/004678
(87) International publication number: WO 2020/175082

(56) References cited:
- EP-A2- 0 342 986
- EP-B1- 1 805 034
- WO-A1-2018/061741
- JP-A- 2012 091 459
- JP-A- 2018 043 417
- JP-A- H0 199 884
- JP-A- H0 911 652
- JP-A- H0 911 652
- JP-A- H08 118 814
- JP-A- S63 302 090
- JP-A- S63 302 090

## Description

### Technical Field

The present disclosure relates to a thermal transfer sheet.

### Background Art

In a known thermofusible transfer method, energy is applied to a thermal transfer sheet including a substrate and a transfer layer using a thermal head or the like to transfer the transfer layer onto a transfer-receiving article, such as a paper or plastic sheet, and form an image or a protective layer.

Images formed by the thermofusible transfer method have high density and sharpness. Thus, the method is suitable for recording binary images, such as characters and line drawings. Variable information, such as addresses, customer information, numbers, and bar codes, can be recorded on transfer-receiving articles by the thermofusible transfer method.

In one embodiment of a known thermofusible transfer method, an image is formed on a thermal transfer sheet that has a transfer layer including a receiving layer (what is called an intermediate transfer medium), and then the transfer layer is transferred onto a transfer-receiving article.

The transfer layer in the thermal transfer sheet is of a hot peeling-type designed to be separated immediately after heating or a cold peeling-type designed to be separated after a certain period following heating, and these types are appropriately selected according to the type of printer to be used.

For example, a thermal transfer sheet including a transfer layer of the hot peeling-type is proposed in JP 11-277923 A.

A thermal transfer sheet including a transfer layer of the cold peeling-type is proposed in JP 2002-103829 A.

From the perspective of cost reduction, however, it is not preferable to use a thermal transfer sheet including a transfer layer of the hot peeling-type and a thermal transfer sheet including a transfer layer of the cold peeling-type for different purposes. Thus, there is a demand for a thermal transfer sheet with low peeling strength immediately after heating (hereinafter referred to as hot peeling strength) and with low peeling strength after a certain period following heating (hereinafter referred to as cold peeling strength).

EP 1 805 034 B1 shows a donor element for use in a thermal transfer process comprising a support layer formed by a stretching process, a light-to-heat conversion layer disposed adjacent the support layer comprising a light absorber, and a transfer layer disposed adjacent the light-to-heat conversion layer opposite the support layer, after the stretching process, the transfer layer comprising a material capable of being image-wise transferred from the donor element to an adjacent receiver element when the donor element is selectively exposed to imaging light, wherein the light-to-heat conversion layer is coated on the support layer prior to completion of the stretching process.

In a thermal layer recording medium of JP H09 11652 A, a release layer based on a hot-melt substance and an ink layer consisting of a coloring agent and a hot-melt substance are successively laminated on a support and at least the hot-melt substance of the release layer is a higher alcohol with an average molecular weight of 400 to 800.

A thermal transfer recording medium of EP 0 342 986 A2 comprises a support having thereon a first heat softening layer which contains a heat-fusible substance, and a second heat softening layer which contains a resin.

JP S63 302090 A shows a thermal transfer sheet according to the preamble of claim 1.

### SUMMARY OF INVENTION

### Technical Problem

It is an object of the present invention to provide a thermal transfer sheet with low hot and cold peeling strengths.

### Solution to Problem

The thermal transfer sheet according to the present invention is defined in the claims.

### Advantageous Effects of Invention

The present invention can provide a thermal transfer sheet with low hot and cold peeling strengths.

### BRIEF DESCRIPTION OF DRAWINGS

[Fig. 1] Fig. 1 is a schematic cross-sectional view of an embodiment of a thermal transfer sheet according to the present disclosure.
[Fig. 2] Fig. 2 is a schematic cross-sectional view of an embodiment of the thermal transfer sheet according to the present disclosure.
[Fig. 3] Fig. 3 is a schematic cross-sectional view of an embodiment of the thermal transfer sheet according to the present disclosure.
[Fig. 4] Fig. 4 is a schematic cross-sectional view of an embodiment of the thermal transfer sheet according to the present disclosure.
[Fig. 5] Fig. 5 is a schematic cross-sectional view of an embodiment of the thermal transfer sheet according to the present disclosure.
[Fig. 6] Fig. 6 is a schematic cross-sectional view of an embodiment of the thermal transfer sheet according to the present disclosure.
[Fig. 7] Fig. 7 is a schematic cross-sectional view of an embodiment of the thermal transfer sheet according to the present disclosure.
[Fig. 8] Fig. 8 is a front view of an image formed on a transfer-receiving article in thin line printability evaluation in the Examples.

### DESCRIPTION OF EMBODIMENTS

### (Thermal Transfer Sheet)

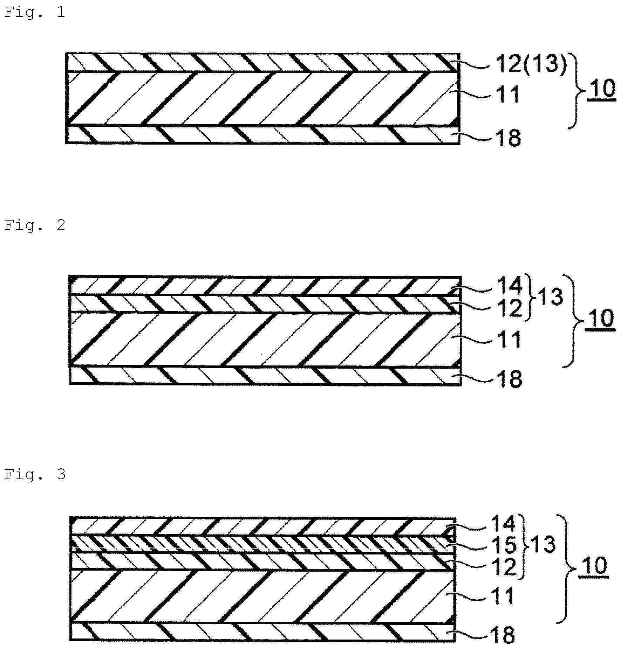

As illustrated in Fig. 1, a thermal transfer sheet 10 according to the present disclosure includes a substrate 11 and a transfer layer 13 including at least a peeling layer 12.

In one embodiment, as illustrated in Fig. 2, the transfer layer 13 includes a coloring layer 14 on the peeling layer 12. In one embodiment, as illustrated in Fig. 3, the transfer layer 13 includes a protective layer 15 between the peeling layer 12 and the coloring layer 14.

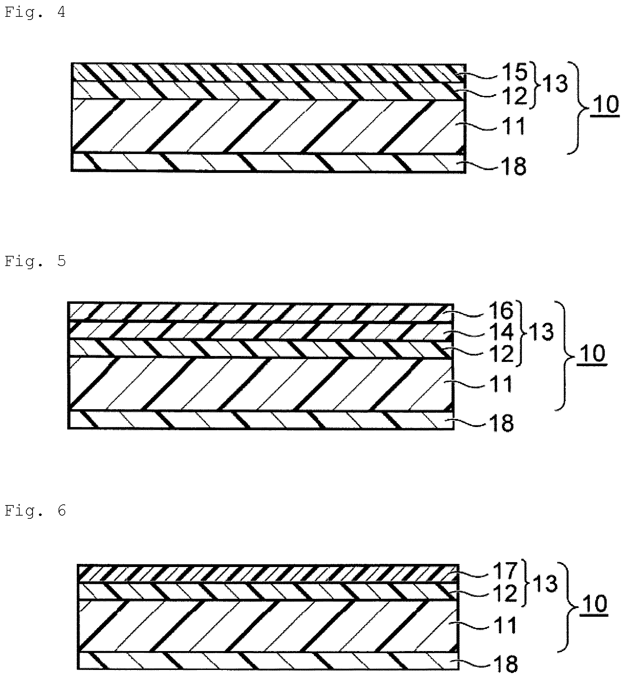

In one embodiment, as illustrated in Fig. 4, the transfer layer 13 includes the protective layer 15 on the peeling layer 12.

In one embodiment, as illustrated in Fig. 5, the transfer layer 13 includes an adhesive layer 16 on the outermost side.

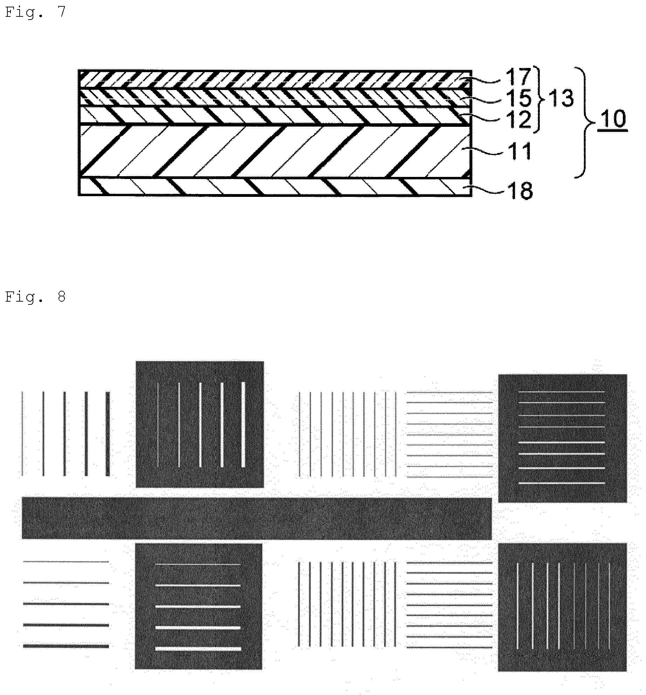

In one embodiment, as illustrated in Fig. 6, the transfer layer 13 includes a receiving layer 17 on the peeling layer 12. As illustrated in Fig. 7, the transfer layer 13 includes the protective layer 15 between the peeling layer 12 and the receiving layer 17.

In one embodiment, as illustrated in Figs. 1 to 7, the thermal transfer sheet 10 includes a back layer 18 on an opposite surface of the substrate 11 from the transfer layer 13.

In one embodiment, the thermal transfer sheet 10 according to the present disclosure may further include a release layer or a primer layer (not shown) on the substrate.

Each layer of the thermal transfer sheet according to the present disclosure is described below.

### (Substrate)

Any substrate can be used that has heat resistance to thermal energy applied during thermal transfer and that has mechanical strength and solvent resistance to support a transfer layer or the like on the substrate.

The substrate may be a film formed of a resin material (hereinafter referred to simply as a "resin film"). Examples of the resin material include polyesters, such as poly(ethylene terephthalate) (PET), poly(butylene terephthalate) (PBT), poly(ethylene naphthalate) (PEN), Poly(1,4-cyclohexylenedimethylene terephthalate), and terephthalic acid-cyclohexanedimethanol-ethylene glycol copolymers; polyamides, such as nylon 6 and nylon 6,6; polyolefins, such as polyethylene (PE), polypropylene (PP), and polymethylpentene; vinyl resins, such as poly(vinyl chloride), poly(vinyl alcohol) (PVA), poly(vinyl acetate), vinyl chloride-vinyl acetate copolymers, poly(vinyl butyral), and polyvinylpyrrolidone (PVP); (meth)acrylic resins, such as polyacrylates and polymethacrylates; imide resins, such as polyimides and polyetherimides; cellulose resins, such as cellophane, cellulose acetate, nitrocellulose, cellulose acetate propionate (CAP), and cellulose acetate butyrate (CAB); styrene resins, such as polystyrene (PS); polycarbonates; and ionomer resins.

Among these resin materials, in terms of heat resistance and mechanical strength, polyesters are preferred, PET or PEN is more preferred, and PET is particularly preferred.

In the present disclosure, "(meth)acrylic" includes both "acrylic" and "methacrylic". "(Meth)acrylate" also includes both "acrylate" and "methacrylate".

A laminate of the resin films can also be used as the substrate. The laminate of the resin films can be formed by a dry lamination method, a wet lamination method, or an extrusion method.

When the substrate is a resin film, the resin film may be a stretched film or an unstretched film. In terms of strength, a uniaxially or biaxially stretched film is preferred.

The substrate preferably has a thickness in the range of 2 to 25 µm, more preferably 3 to 16 µm. This can improve the mechanical strength of the substrate and thermal energy transfer during thermal transfer.

### (Transfer Layer)

The thermal transfer sheet according to the present disclosure includes a transfer layer, and the transfer layer includes at least a peeling layer.

In one embodiment, the transfer layer includes a coloring layer on the peeling layer.

In one embodiment, the transfer layer includes a protective layer on the peeling layer. If the transfer layer includes the coloring layer and the protective layer, the protective layer is formed between the peeling layer and the coloring layer. If the transfer layer includes a receiving layer and the protective layer, the protective layer is formed between the peeling layer and the receiving layer.

In one embodiment, the transfer layer includes an adhesive layer on the outermost side.

In one embodiment, the transfer layer includes a receiving layer on the peeling layer.

### (Peeling Layer)

When the peeling layer contains a vinyl resin and at least one of an alcohol alkoxylate and an alcohol having 18 to 80 carbon atoms, this can decrease the hot and cold peeling strengths of the thermal transfer sheet.

In the present disclosure, the vinyl resin may be poly(vinyl chloride), poly(vinyl acetate), a vinyl chloride-vinyl acetate copolymer, polyvinylpyrrolidone, or the like.

In the peeling layer of the thermal transfer sheet according to the present disclosure, poly(vinyl alcohol) is not a vinyl resin. Among these, a vinyl chloride-vinyl acetate copolymer is preferred. The use of a vinyl chloride-vinyl acetate copolymer can decrease the hot and cold peeling strengths of the thermal transfer sheet.

In the present disclosure, the vinyl chloride-vinyl acetate copolymer refers to a copolymer of vinyl chloride and vinyl acetate.

The vinyl chloride-vinyl acetate copolymer may contain a compound other than vinyl chloride and vinyl acetate as a copolymerization component. Structural units derived from the other compound in the vinyl chloride-vinyl acetate copolymer preferably constitute 10% or less by mass, more preferably 5% or less by mass, still more preferably 3% or less by mass.

The amount of vinyl resin in the peeling layer preferably ranges from 40% to 99% by mass, more preferably 50% to 95% by mass. This can decrease the hot and cold peeling strengths of the thermal transfer sheet. This can also improve the adhesion between the peeling layer and the substrate of the thermal transfer sheet.

Furthermore, after the transfer layer of the thermal transfer sheet according to the present disclosure is transferred to an intermediate transfer medium transfer layer of an intermediate transfer medium, this can also improve transferability when the transfer layer and the intermediate transfer medium transfer layer are transferred to a transfer-receiving article (hereinafter referred to as retransferability).

Furthermore, this can also improve the adhesion between the transfer-receiving article and the peeling layer of the transfer layer and improve the durability of a printed material.

An alcohol ethoxylate can further decrease the hot and cold peeling strengths of the thermal transfer sheet.

Alcohol ethoxylates represented by the following general formula (1) are used for transfer sheets according to claim 1. These can further decrease the hot and cold peeling strengths of the thermal transfer sheet.

CₘH₂ₘ₊₁-O-(CH₂CH₂O)ₙ-H (1)

In terms of hot peeling strength, cold peeling strength, and thin line printability, m denotes an integer in the range of 30 to 53 in formula (1).

In the general formula (1), n denotes an integer in the range of 2 to 100. In terms of hot peeling strength, cold peeling strength, and thin line printability, n preferably denotes an integer in the range of 2 to 90, more preferably 3 to 50, still more preferably 3 to 7.

In the general formula (1), the ratio (n/m) of n to m is 3.0 or less. In terms of hot peeling strength, cold peeling strength, and thin line printability, n/m preferably ranges from 0.01 to 2.5, more preferably 0.03 to 0.3.

The amount of alcohol alkoxylate in the peeling layer preferably ranges from 1% to 45% by mass, more preferably 2% to 30% by mass, still more preferably 3% to 25% by mass. This can further decrease the hot and cold peeling strengths and further improve the thin line printability. This can also improve adhesion to the substrate, retransferability, and the durability of a printed material.

The peeling layer contains an alcohol having 18 to 80 carbon atoms. In terms of the cold peeling strength of the thermal transfer sheet, the number of carbon atoms in the alcohol preferably ranges from 20 to 30.

The alcohol having 18 to 80 carbon atoms may be linear or branched. The alcohol having 18 to 80 carbon atoms may be an aliphatic alcohol, an alicyclic alcohol, or an aromatic alcohol.

Among these, a linear aliphatic alcohol is preferred. This can further decrease the hot and cold peeling strengths.

The amount of alcohol having 18 to 80 carbon atoms in the peeling layer ranges from 1% to 45% by mass in thermal transfer sheets according to claim 6, more preferably 2% to 30% by mass, still more preferably 3% to 25% by mass. This can further decrease the hot and cold peeling strengths and further improve the thin line printability. This can also improve adhesion to the substrate, retransferability, and the durability of a printed material.

The ratio (A/B) of the amount (A) of vinyl resin in the peeling layer to the sum (B) of the amount of alcohol alkoxylate and the amount of alcohol having 18 to 80 carbon atoms in the peeling layer preferably ranges from 60/40 to 99.5/0.5, more preferably 80/20 to 95/5, based on mass.

The peeling layer may contain a resin material other than the vinyl resins, for example, a (meth)acrylic resin, an epoxy resin, a cellulose resin, a polyurethane, a polyolefin, or a polyester.

The peeling layer may contain an additive agent, for example, a filler, a plasticizing material, an antistatic material, an ultraviolet absorbing material, inorganic particles, organic particles, a release material, and/or a dispersing material.

The peeling layer preferably has a thickness in the range of 0.1 to 2 µm, more preferably 0.5 to 1.3 µm. This can further decrease the hot and cold peeling strengths and further improve the thin line printability. This can also improve adhesion to the substrate, retransferability, and the durability of a printed material.

The peeling layer can be formed by dispersing or dissolving the above materials in water or an appropriate solvent to prepare a coating liquid, applying the coating liquid to a substrate or the like to form a coating film, and drying the coating film. The application method may be a known method, such as a roll coating method, a reverse roll coating method, a gravure coating method, a reverse gravure coating method, a bar coating method, or a rod coating method.

### (Coloring Layer)

A coloring material in the coloring layer can be appropriately selected from carbon black, inorganic pigments, organic pigments, and dyes according to the required color tone or the like.

For example, for bar code printing, it is preferable to have a particularly sufficient black density and not to be discolored or faded by light, heat, or the like. Such a coloring material may be, for example, carbon black, such as lampblack, graphite, or a nigrosine dye. For color printing, another chromatic dye or pigment is used.

Furthermore, titanium oxide, zinc oxide, iron oxide, iron yellow, ultramarine blue, a hologram powder, an aluminum powder, a metallic pigment, a pearl pigment, or the like can be used.

The amount of coloring material in the coloring layer preferably ranges from 25% to 95% by mass, more preferably 30% to 95% by mass. This can improve the image density on a transfer-receiving article.

In one embodiment, the coloring layer contains the above resin material. The coloring layer may contain the above additive material.

The coloring layer preferably has a thickness in the range of 0.3 to 6 µm, more preferably 0.4 to 4 µm. This can improve the image density on a transfer-receiving article.

The coloring layer can be formed by dispersing or dissolving the above materials in water or an appropriate solvent to prepare a coating liquid, applying the coating liquid to a peeling layer or the like by the above application method to form a coating film, and drying the coating film.

### (Protective Layer)

In one embodiment, the protective layer contains a resin material, such as a (meth)acrylic resin, a polyester, a cellulose resin, a polystyrene, a polyamide, a poly(vinyl acetal), a polycarbonate, a thermosetting resin, or an active light curing resin.

The protective layer may contain the above additive material.

The protective layer may have any thickness, for example, in the range of 0.1 to 50 µm.

The protective layer can be formed by dispersing or dissolving the above materials in water or an appropriate solvent to prepare a coating liquid, applying the coating liquid to a peeling layer or the like by the above application method to form a coating film, and drying the coating film.

### (Adhesive Layer)

In one embodiment, the adhesive layer contains at least one thermoplastic resin that softens and exhibits adhesiveness upon heating.

The thermoplastic resin may be, for example, a polyester, a vinyl resin, a (meth)acrylic resin, a polyurethane, a cellulose resin, a polyamide, a polyolefin, a polystyrene, or a chlorinated resin thereof.

The adhesive layer may contain the above additive material.

The adhesive layer has a thickness in the range of, for example, 0.1 to 0.8 µm.

The adhesive layer can be formed by dispersing or dissolving the above materials in water or an appropriate solvent to prepare a coating liquid, applying the coating liquid to a coloring layer or the like by the above application method to form a coating film, and drying the coating film.

### (Receiving Layer)

The receiving layer is a layer that receives a sublimation dye from a dye layer of a sublimation thermal transfer sheet and maintains a formed image.

The receiving layer contains a resin material, for example, a polyolefin, such as polypropylene, a halogenated resin, such as poly(vinyl chloride) or poly(vinylidene chloride), a vinyl resin, such as poly(vinyl acetate), a vinyl chloride-vinyl acetate copolymer, an ethylene-vinyl acetate copolymer, or a polyacrylate, a polyester, such as poly(ethylene terephthalate) or poly(butylene terephthalate), an acrylic-styrene resin, a polystyrene, a polyamide, a copolymer of an olefin (ethylene, propylene, etc.) and another vinyl monomer, an ionomer, a cellulose resin, such as cellulose diastase, or a polycarbonate. Among these, poly(vinyl chloride), an acryl-styrene resin, or a polyester is preferred.

In one embodiment, the receiving layer contains a release material. This can improve releasability from the sublimation thermal transfer sheet.

The release material may be, for example, a solid wax, such as a polyethylene wax, a polyamide wax, or a Teflon (registered trademark) powder, a fluorinated or phosphate ester surfactant, a silicone oil, a modified silicone oil, such as a reactive silicone oil or a curable silicone oil, or a silicone resin.

The silicone oil is preferably a modified silicone oil. The modified silicone oil may be an amino-modified silicone, an epoxy-modified silicone, an aralkyl-modified silicone, an epoxy-aralkyl-modified silicone, an alcohol-modified silicone, a vinyl-modified silicone, a urethane-modified silicone, or the like. Among these, an epoxy-modified silicone, an aralkyl-modified silicone, or an epoxy-aralkyl-modified silicone is particularly preferred.

The receiving layer may contain the above additive material.

The receiving layer may have any thickness, for example, in the range of 0.5 to 20 µm.

The receiving layer can be formed by dispersing or dissolving the above materials in water or an appropriate solvent to prepare a coating liquid, applying the coating liquid to a peeling layer or the like by the above application method to form a coating film, and drying the coating film.

### (Back Layer)

In one embodiment, the thermal transfer sheet according to the present disclosure includes a back layer on a surface of the substrate on which the transfer layer is not formed. This can reduce the occurrence of sticking, wrinkles, and the like due to heating during thermal transfer.

In one embodiment, the back layer contains a resin material. The resin material may be, for example, a cellulose resin, a styrene resin, a vinyl resin, a polyester, a polyurethane, a silicone-modified polyurethane, a fluorine-modified polyurethane, or a (meth)acrylic resin.

In one embodiment, the back layer contains, as a resin material, a two-component curable resin that is cured with an isocyanate compound or the like. Such a resin may be a poly(vinyl acetal), such as poly(vinyl acetoacetal) or poly(vinyl butyral), or the like.

In one embodiment, the back layer contains inorganic or organic particles. This can further reduce the occurrence of sticking, wrinkles, and the like due to heating during thermal transfer.

The inorganic particles may be, for example, a clay mineral, such as talc or kaolin, a carbonate, such as calcium carbonate or magnesium carbonate, a hydroxide, such as aluminum hydroxide or magnesium hydroxide, a sulfate, such as calcium sulfate, an oxide, such as silica, graphite, niter, or boron nitride.

The organic particles may be organic resin particles formed of a (meth)acrylic resin, a Teflon (registered trademark) resin, a silicone resin, a lauroyl resin, a phenolic resin, an acetal resin, a styrene resin, a polyamide, or the like, cross-linked resin particles formed by reacting one of these resins with a cross-linking material, or the like.

The back layer preferably has a thickness in the range of 0.1 to 2 µm, more preferably 0.1 to 1 µm. This can reduce the occurrence of sticking, wrinkles, and the like while maintaining thermal energy transfer during thermal transfer.

The back layer can be formed by dispersing or dissolving the above materials in water or an appropriate solvent to prepare a coating liquid, applying the coating liquid to the substrate by the above application method to form a coating film, and drying the coating film.

### (Release Layer)

In one embodiment, the thermal transfer sheet according to the present disclosure includes a release layer between the substrate and the transfer layer. This can improve the transferability of the thermal transfer sheet.

In one embodiment, the release layer contains a resin material. The resin material may be, for example, a (meth)acrylic resin, a polyurethane, a polyamide, a polyester, a melamine resin, a polyol resin, a cellulose resin, or a silicone resin.

In one embodiment, the release layer contains a release material, such as a silicone oil, a phosphate ester plasticizer, a fluorinated compound, a wax, a metallic soap, or a filler.

The release layer has a thickness in the range of 0.2 to 2 µm, for example.

The release layer can be formed by dispersing or dissolving the above materials in water or an appropriate solvent to prepare a coating liquid, applying the coating liquid to the substrate or the like by the above application method to form a coating film, and drying the coating film.

### (Primer Layer)

In one embodiment, the thermal transfer sheet according to the present disclosure includes a primer layer on one or both surfaces of the substrate. This can improve the adhesion between the substrate and an adjacent layer.

In one embodiment, the primer layer contains a resin material, such as a polyester, a vinyl resin, a polyurethane, a (meth)acrylic resin, a polyamide, an ether resin, or a cellulose resin.

The primer layer has a thickness in the range of 0.2 to 2 µm, for example.

The primer layer can be formed by dispersing or dissolving the above materials in water or an appropriate solvent to prepare a coating liquid, applying the coating liquid to the substrate by the above application method to form a coating film, and drying the coating film.

### EXAMPLES

The invention is defined in the claims and illustrated with the following Examples 3 to 15 and 18 to 32, while Examples 1 to 2, 16 to 17, 33 to 35 and the comparative examples are not according to the invention.

### Example 1 not according to the invention

A coating liquid with the following composition for forming a peeling layer was applied to one surface of a PET film with a thickness of 4.5 µm and was dried to form a peeling layer with a thickness of 0.75 µm.

### <Coating Liquid for Forming Peeling Layer>

| | |
|---|---|
| • Vinyl chloride-vinyl acetate copolymer A (manufactured by Nissin Chemical Industry Co., Ltd., Solbin (registered trademark) CNL, described as vinyl chloride-vinyl acetate in the table) | 70 parts by mass |
| • Alcohol alkoxylate a (an alcohol ethoxylate satisfying the general formula (1) (hereinafter referred to as AE), m = 25, n = 8) | 30 parts by mass |
| • Methyl ethyl ketone (MEK) | 80 parts by mass |
| • Normal propyl acetate (NPAC) | 20 parts by mass |

A coating liquid with the following composition for forming a coloring layer was applied to the peeling layer thus formed and was dried to form a coloring layer with a thickness of 1 µm. The peeling layer and the coloring layer are referred to as a transfer layer.

### <Coating Liquid for Forming Coloring Layer>

| | |
|---|---|
| • Carbon black | 40 parts by mass |
| • Vinyl chloride-vinyl acetate copolymer A | 60 parts by mass |
| • Toluene | 100 parts by mass |
| • MEK | 100 parts by mass |

A coating liquid with the following composition for forming a back layer was applied to the other surface of the PET film and was dried to form a back layer with a thickness of 0.3 µm. Thus, a thermal transfer sheet was formed.

### <Coating Liquid for Back Layer>

| | |
|---|---|
| • Poly(vinyl butyral) (manufactured by Sekisui Chemical Co., Ltd., S-Lec (registered trademark) BX-1) | 2.0 parts by mass |
| • Polyisocyanate (manufactured by DIC Corporation, Burnock (registered trademark) D750) | 9.2 parts by mass |
| • Phosphate ester surfactant (manufactured by Dai-ichi Kogyo Seiyaku Co., Ltd., Plysurf (registered trademark) A208N) | 1.3 parts by mass |
| • Talc | 0.3 parts by mass |

### (manufactured by Nippon Talc Co., Ltd., Micro Ace (registered trademark) P-3)

| | |
|---|---|
| Toluene | 43.6 parts by mass |
| MEK | 43.6 parts by mass |

### Examples 3 to 15 and 18 to 32 according to the invention, Examples 2, 16, 17 and 33 to 35 not according to the invention and Comparative Examples 1 to 9

Thermal transfer sheets were formed in the same manner as in Example 1 except that the structure and thickness of the peeling layer were changed as shown in Tables 1 and 2.

The components in Tables 1 and 2 are described in detail below.

| | | | |
|---|---|---|---|
| AEb: | m = 25, | n = 32, | n/m = 1.28 |
| AEc: | m = 33, | n = 3, | n/m = 0.09 |
| AEd: | m = 33, | n = 10, | n/m = 0.3 |
| AEe: | m = 33, | n = 42, | n/m = 1.27 |
| AEf: | m = 33, | n = 94, | n/m = 2.85 |
| AEg: | m = 40, | n = 3, | n/m = 0.08 |
| AEh: | m = 40, | n = 13, | n/m = 0.33 |
| AEi: | m = 40, | n = 4, | n/m = 0.1 |
| AEj: | m = 50, | n = 16, | n/m = 0.32 |

· Alcohol a: the number of carbon atoms 20, linear aliphatic alcohol
· Alcohol b: the number of carbon atoms 40, linear aliphatic alcohol
· Alcohol c: the number of carbon atoms 60, linear aliphatic alcohol
· Alcohol d: the number of carbon atoms 16, linear aliphatic alcohol
• Polyester: manufactured by Toyobo Co., Ltd., Vylon (registered trademark) 600
• (Meth)acrylic resin: manufactured by Mitsubishi Chemical Corporation, Dianal (registered trademark) BR-83
• Glyceryl monostearate: manufactured by Kao Corporation

### Example 33 not according to the invention

A thermal transfer sheet was formed in the same manner as in Example 16 not according to the invention except that the composition of the coating liquid for forming a coloring layer was changed as described below to form a coloring layer with a thickness of 3 µm.

### <Coating Liquid for Forming Coloring Layer>

| | |
|---|---|
| • Titanium oxide (manufactured by Ishihara Sangyo Kaisha, Ltd., R-780) | 89 parts by mass |
| • (Meth) acrylic resin (manufactured by Mitsubishi Chemical Corporation, Dianal (registered trademark) BR-87) | 10 parts by mass |
| • Vinyl chloride-vinyl acetate copolymer (manufactured by Nissin Chemical Industry Co., Ltd., Solbin (registered trademark) CNL) | 0.99 parts by mass |
| • Polyester (manufactured by Toyobo Co., Ltd., Vylon (registered trademark) 200) | 0.01 parts by mass |
| • Toluene | 100 parts by mass |
| • MEK | 100 parts by mass |

### Example 34 not according to the invention

A thermal transfer sheet was formed in the same manner as in Example 16 not according to the invention except that the composition of the coating liquid for forming a coloring layer was changed as described below to form a coloring layer with a thickness of 2 µm.

### <Coating Liquid for Forming Coloring Layer>

| | |
|---|---|
| • Pearl pigment (Nihon Koken Kogyo Co., Ltd., Twincle Pearl (registered trademark) RXC-SO) | 30 parts by mass |
| • Vinyl chloride-vinyl acetate copolymer (manufactured by Nissin Chemical Industry Co., Ltd., Solbin (registered trademark) CNL) | 30 parts by mass |
| • Toluene | 100 parts by mass |
| • MEK | 100 parts by mass |

### Example 35 not according to the invention

A thermal transfer sheet was formed in the same manner as in Example 16 not according to the invention except that the composition of the coating liquid for forming a coloring layer was changed as described below to form a coloring layer with a thickness of 2 µm.

### <Coating Liquid for Forming Coloring Layer>

| | |
|---|---|
| • Aluminum pigment (manufactured by Asahi Kasei Metals Corporation,non-leafing 8NL-S) | 30 parts by mass |
| • Vinyl chloride-vinyl acetate copolymer (manufactured by Nissin Chemical Industry Co., Ltd., Solbin (registered trademark) CNL) | 30 parts by mass |
| • Toluene | 100 parts by mass |
| • MEK | 100 parts by mass |

**[Table 1]**

| Table 1 | Composition of peeling layer (mass%) | | | | | | | | | | | | | | | | | | Thickness of peeling layer (µm) |
|---|---|---|---|---|---|---|---|---|---|---|---|---|---|---|---|---|---|---|---|
| | Vinyl chloride-vinyl acetate | Poly ester | (Meth) acrylic | AEa (m=25, n=8) | AEb (m=25, n=32) | AEc (m=33, n=3) | AEd (m=33, n=10) | AEe (m=33, n=42) | AEf (m=33, n=94) | AEg (m=40, n=3) | AEh (m=40, n=13) | AEi (m=50, n=4) | AEj (m=50, n=16) | Alcohol a (number of carbons 20) | Alcohol b (number of carbons 40) | Alcohol c (number of carbons 60) | Alcohol d (number of carbons 16) | Glyceryl mono stearate | |
| Example 1 | 70 | | | 30 | | | | | | | | | | | | | | | 0.75 |
| Example 2 | 70 | | | | 30 | | | | | | | | | | | | | | 0.75 |
| Example 3 | 70 | | | | | 30 | | | | | | | | | | | | | 0.75 |
| Example 4 | 70 | | | | | | 30 | | | | | | | | | | | | 0.75 |
| Example 5 | 70 | | | | | | | 30 | | | | | | | | | | | 0.75 |
| Example 6 | 70 | | | | | | | | 30 | | | | | | | | | | 0.75 |
| Example 7 | 70 | | | | | | | | | 30 | | | | | | | | | 0.75 |
| Example 8 | 70 | | | | | | | | | | 30 | | | | | | | | 0.75 |
| Example 9 | 70 | | | | | | | | | | | 30 | | | | | | | 0.75 |
| Example 10 | 70 | | | | | | | | | | | | 30 | | | | | | 0.75 |
| Example 11 | 70 | | | | | | | | | | | | | 30 | | | | | 0.75 |
| Example 12 | 85 | | | | | 15 | | | | | | | | | | | | | 0.75 |
| Example 13 | 85 | | | | | | | | | 15 | | | | | | | | | 0.75 |
| Example 14 | 85 | | | | | | | | | | | 15 | | | | | | | 0.75 |
| Example 15 | 85 | | | | | | | | | | | | | 15 | | | | | 0.75 |
| Example 16 | 95 | | | 5 | | | | | | | | | | | | | | | 0.75 |
| Example 17 | 95 | | | | 5 | | | | | | | | | | | | | | 0.75 |
| Example 18 | 95 | | | | | 5 | | | | | | | | | | | | | 0.75 |
| Example 19 | 95 | | | | | | 5 | | | | | | | | | | | | 0.75 |
| Example 20 | 95 | | | | | | | 5 | | | | | | | | | | | 0.75 |
| Example 21 | 95 | | | | | | | | 5 | | | | | | | | | | 0.75 |
| Example 22 | 95 | | | | | | | | | 5 | | | | | | | | | 0.75 |
| Example 23 | 95 | | | | | | | | | | 5 | | | | | | | | 0.75 |
| Example 24 | 95 | | | | | | | | | | | 5 | | | | | | | 0.75 |
| Example 25 | 95 | | | | | | | | | | | | 5 | | | | | | 0.75 |
| Example 26 | 85 | | | | | | | | | | | | | 5 | | | | | 0.75 |
| Example 27 | 99 | | | | | 1 | | | | | | | | | | | | | 0.75 |
| Example 28 | 85 | | | | | | | | | | | | | | 15 | | | | 0.75 |
| Example 29 | 85 | | | | | | | | | | | | | | | 15 | | | 0.75 |
| Example 30 | 85 | | | | | 15 | | | | | | | | | | | | | 0.5 |
| Example 31 | 85 | | | | | 15 | | | | | | | | | | | | | 1 |
| Example 32 | 90 | | | 5 | | | | | | | | | | | 5 | | | | 0.75 |
| Example 33 | 95 | | | 5 | | | | | | | | | | | | | | | 0.75 |
| Example 34 | 95 | | | 5 | | | | | | | | | | | | | | | 0.75 |
| Example 35 | 95 | | | 5 | | | | | | | | | | | | | | | 0.75 |

**[Table 2]**

| Table 2 | Composition of peeling layer (mass%) | | | | | | | | | | | | | | | | | | Thickness of peeling layer (µm) |
|---|---|---|---|---|---|---|---|---|---|---|---|---|---|---|---|---|---|---|---|
| | Vinyl chloride-vinyl acetate | Poly ester | (Meth) acrylic | AEa (m=25, n=8) | AEb (m=25, n=32) | AEc (m=33, n=3) | AEd (m=33, n=10) | AEe (m=33, n=42) | AEf (m=33, n=94) | AEg (m=40, n=3) | AEh (m=40, n=13) | AEi (m=50, n=4) | AEj (m=50, n=16) | Alcohol a (number of carbons 20) | Alcohol b (number of carbons 40) | Alcohol c (number of carbons 60) | Alcohol d (number of carbons 16) | Glyceryl mono stearate | |
| Comparative example 1 | 70 | | | | | | | | | | | | | | | | | 30 | 0.75 |
| Comparative example 2 | 85 | | | | | | | | | | | | | | | | | 15 | 0.75 |
| Comparative example 3 | 85 | | | | | | | | | | | | | | | | 15 | | 0.75 |
| Comparative example 4 | | 70 | | | | 30 | | | | | | | | | | | | | 0.75 |
| Comparative example 5 | | 85 | | | | 15 | | | | | | | | | | | | | 0.75 |
| Comparative example 6 | | 95 | | | | 5 | | | | | | | | | | | | | 0.75 |
| Comparative example 7 | | | | | | 30 | | | | | | | | | | | | | 0.75 |
| Comparative example 8 | | | | | | 15 | | | | | | | | | | | | | 0.75 |
| Comparative example 9 | | | | | | 5 | | | | | | | | | | | | | 0.75 |

### <<Evaluation of Hot Peeling Strength>>

The thermal transfer sheet formed in each of the examples and comparative examples was adhered closely to a PVC card (manufactured by Dai Nippon Printing Co., Ltd., 5 cm in width x 7 cm in length) serving as a transfer-receiving article using the following test printer, thus forming a laminate in which a surface of the thermal transfer sheet on the transfer layer side was adhered closely to the transfer-receiving article.

### (Test Printer)

- Thermal head: manufactured by Kyocera Corporation, KEE-57-12GAN2-STA
- Average resistance of heating element: 3303 Ω
- Resolution in the main scanning direction: 300 dpi (dot per inch)
- Resolution in the sub-scanning direction: 300 dpi
- Line speed: 3.0 ms/line
- Print initial temperature: 35°C
- Pulse duty ratio: 70%
- Print image: solid image (0/255 gradation value)

A peel tester (manufactured by Kyowa Interface Science Co., Ltd., VPA-3) was prepared. The laminate (5 cm in width) was placed on a stage of the peel tester such that the transfer-receiving article side was in contact with the stage. The peel tester was set as described below and was allowed to stand for 3 minutes.

### (Peel Tester Conditions)

- Peel angle: 90 degrees
- Stage temperature: 50°C

The substrate of the thermal transfer sheet was then separated to measure the peeling strength. The peel interface was between the substrate and the peeling layer. The measured peeling strength was evaluated based on the following evaluation criteria. Table 3 shows the evaluation results.

### (Evaluation Criteria)

A: The peeling strength was less than 1 N.
B: The peeling strength was 1 N or more and less than 2.5 N.
NG-1: The peeling strength was 2.5 N or more and less than 4 N.
NG-2: The peeling strength was 4 N or more or could not be measured due to breakage.

### <<Evaluation of Cold peeling Strength>>

The transfer layer side of the thermal transfer sheet formed in each of the examples and comparative examples was adhered closely to a PVC card (manufactured by Dai Nippon Printing Co., Ltd., 5 cm in width x 7 cm in length) serving as a transfer-receiving article using the following test printer, thus forming a laminate.

### (Test Printer)

- Thermal head: manufactured by Kyocera Corporation, KEE-57-12GAN2-STA
- Average resistance of heating element: 3303 Ω
- Resolution in the main scanning direction: 300 dpi
- Resolution in the sub-scanning direction: 300 dpi
- Line speed: 3.0 ms/line
- Print initial temperature: 35°C
- Pulse duty ratio: 70%
- Print image: solid image (0/255 gradation value)

The laminate was allowed to stand at 22.5°C and at a relative humidity of 50% for 1 hour.

The laminate (5 cm in width) after standing was placed on the stage of the peel tester such that the transfer-receiving article side was in contact with the stage. The peel tester was set as described below and was allowed to stand for 3 minutes.

### (Peel Tester Conditions)

- Peel angle: 90 degrees
- Stage temperature: 25°C

The substrate of the thermal transfer sheet was then separated to measure the peeling strength. The peeling interface was between the substrate and the peeling layer. The measured peeling strength was evaluated based on the following evaluation criteria. Table 3 shows the evaluation results.

### (Evaluation Criteria)

A: The peeling strength was less than 1 N.
B: The peeling strength was 1 N or more and less than 2.5 N.
NG-1: The peeling strength was 2.5 N or more and less than 4 N.
NG-2: The peeling strength was 4 N or more or could not be measured due to breakage.

### <<Evaluation of Adhesion to Substrate>>

An adhesive tape (manufactured by 3M Japan Limited, Scotch (registered trademark) super transparent tape) was adhered to the transfer layer of the thermal transfer sheet formed in each of the examples and comparative examples, and a 180-degree peel test was performed in accordance with JIS K 6854-2 (published in 1999).

After peeling, the adhesive tape was visually observed and was evaluated based on the following evaluation criteria. Table 2 shows the evaluation results.

### (Evaluation Criteria)

A: No adhesion of the transfer layer to the adhesive tape was observed.
B: Adhesion of the transfer layer was observed in less than 10% of the area of the adhesive tape.
C: Adhesion of the transfer layer was observed in 10% or more and less than 50% of the area of the adhesive tape.
D: Adhesion of the transfer layer was observed in about 50% or more of the area of the adhesive tape.

### <<Evaluation of Thin Line Printability>>

The transfer layer of the thermal transfer sheet formed in each of the examples and comparative examples was transferred onto a transfer layer of a genuine intermediate transfer medium manufactured by HID (model number: 084053, product name: HDP Retransfer Film for HDP5000/HDPii-1500 Images) to form an image including 1-dot, 2-dot, and 3-dot thin lines (see Fig. 8). A card printer (HDP5000, manufactured by HID) was used for the transfer.

The transfer layer and the transfer layer of the intermediate transfer medium were then transferred onto the PVC card with the printer.

### (Printer Conditions)

- Transfer to intermediate transfer medium: default value
- Retransfer temperature: 175°C
- Retransfer speed: 2.0 seconds/inch

The formed image was visually observed and was evaluated based on the following evaluation criteria. Table 3 shows the evaluation results.

### (Evaluation Criteria)

A: No collapsed or faint lines were observed in any of the 1-dot, 2-dot, and 3-dot thin lines.
B: Although no collapsed or faint lines were observed in the 2-dot and 3-dot thin lines, collapsed and faint lines were observed in the 1-dot thin lines.
C: Although no collapsed or faint lines were observed in the 3-dot thin lines, collapsed and faint lines were observed in the 1-dot and 2-dot thin lines.
D: Collapsed and faint lines were observed in the 1-dot, 2-dot, and 3-dot thin lines.

### <<Evaluation of Retransferability>>

The transfer layer of the thermal transfer sheet formed in each of the examples and comparative examples was transferred onto the transfer layer of the genuine intermediate transfer medium manufactured by HID (model number: 084053, product name: HDP Retransfer Film for HDP5000/HDPii-1500 Images) to form a solid image. The card printer (HDP5000, manufactured by HID) was used for the transfer.

The transfer layer and the transfer layer of the intermediate transfer medium were then transferred onto the PVC card with the printer.

### (Printer Conditions)

- Transfer to intermediate transfer medium: default value
- Retransfer temperature: 160°C
- Retransfer speed: 2.0 seconds/inch

The transfer rates of the transfer layer of the thermal transfer sheet and the transfer layer of the intermediate transfer medium transferred onto the PVC card were measured and evaluated based on the following evaluation criteria. Table 3 shows the evaluation results.

### (Evaluation Criteria)

A: The transfer rate was 95% or more.
B: The transfer rate was 80% or more and less than 95%.
C: The transfer rate was 50% or more and less than 80%.
D: The transfer rate was less than 50%.

The transfer rate was measured by the following method.

First, a PVC card to which the transfer layer of the thermal transfer sheet and the transfer layer of the intermediate transfer medium were transferred was digitized with a flatbed scanner (manufactured by Seiko Epson Corporation, GT-X830) under the following conditions.

### (Digitization Conditions)

- Resolution: 600 dpi
- 256 gray scale

The digital image was binarized with image analysis software ImageJ (National Institutes of Health, USA) to calculate the area of a dark portion.

The calculated area of the dark portion was substituted into the following formula to calculate the transfer rate. Transfer rate (%)=(total area - area of dark portion)/total area x 100

### <<Evaluation of Durability>>

The transfer layer of the thermal transfer sheet formed in each of the examples and comparative examples was transferred onto the transfer layer of the genuine intermediate transfer medium manufactured by HID (model number: 084053, product name: HDP Retransfer Film for HDP5000/HDPii-1500 Images) to form a solid image. The card printer (HDP5000, manufactured by HID) was used for the transfer.

The transfer layer and the transfer layer of the intermediate transfer medium were then transferred onto the PVC card with the printer to form a printed material.

### (Printer Conditions)

- Transfer to intermediate transfer medium: default value
- Retransfer temperature: 175°C
- Retransfer speed: 2.0 seconds/inch

The density of the image on the printed material was measured with a reflection densitometer (RD-918, X-Rite).

The formed printed material was then subjected to a Taber test (load 500 gf, 60 cycles/min) with a Taber tester (abrasive wheel CS-10F) in accordance with ANSI-INCITS322-2002, 5.9 Surface Abrasion.

Every 50 cycles, the density of the image was measured as described above, and the number of cycles when the image density decreased by 30% was determined. The number of cycles thus determined was evaluated based on the following evaluation criteria. Table 3 shows the evaluation results.

### (Evaluation Criteria)

| | |
|---|---|
| A: | 750 cycles or more |
| B: | 500 cycles or more and less than 750 cycles |
| C: | 250 cycles or more and less than 500 cycles |
| D: | Less than 250 cycles |

**[Table 3]**

| Table 3 | Evaluation of hot peeling strength | Evaluation of cold peeling strength | Evaluation of adhesion to substrate | Evaluation of thin line printability | Evaluation of retransferability | Evaluation of durability |
|---|---|---|---|---|---|---|
| Example 1 | A | A | C | B | C | C |
| Example 2 | A | A | C | B | C | C |
| Example 3 | A | A | C | A | C | C |
| Example 4 | A | A | C | B | C | C |
| Example 5 | A | A | C | B | C | C |
| Example 6 | A | A | C | B | C | C |
| Example 7 | A | A | C | A | C | C |
| Example 8 | A | A | C | B | C | C |
| Example 9 | A | A | C | A | C | C |
| Example 10 | A | A | C | B | C | C |
| Example 11 | A | A | C | A | C | C |
| Example 12 | A | A | A | A | B | B |
| Example 13 | A | A | A | A | B | B |
| Example 14 | A | A | A | A | B | B |
| Example 15 | A | A | A | A | B | B |
| Example 16 | A | A | A | B | A | A |
| Example 17 | A | A | A | B | A | A |
| Example 18 | A | A | A | B | A | A |
| Example 19 | A | A | A | B | A | A |
| Example 20 | A | A | A | B | A | A |
| Example 21 | B | B | A | B | A | A |
| Example 22 | A | A | A | B | A | A |
| Example 23 | A | A | A | B | A | A |
| Example 24 | A | A | A | B | A | A |
| Example 25 | A | A | A | B | A | A |
| Example 26 | B | B | A | B | A | A |
| Example 27 | B | B | A | C | A | A |
| Example 28 | A | B | A | A | B | B |
| Example 29 | A | B | A | A | B | B |
| Example 30 | A | B | A | B | A | A |
| Example 31 | A | A | B | A | B | B |
| Example 32 | A | A | A | B | A | A |
| Example 33 | A | A | B | B | A | A |
| Example 34 | A | A | A | A | A | B |
| Example 35 | A | A | A | B | A | A |
| Comparative example 1 | NG-1 | NG-1 | C | D | B | D |
| Comparative example 2 | NG-1 | NG-1 | B | D | B | C |
| Comparative example 3 | NG-1 | NG-2 | A | C | A | A |
| Comparative example 4 | B | NG-2 | A | D | A | A |
| Comparative example 5 | B | NG-2 | A | D | A | A |
| Comparative example 6 | B | NG-2 | A | D | A | A |
| Comparative example 7 | B | NG-1 | D | C | D | C |
| Comparative example 8 | B | NG-1 | D | C | D | C |
| Comparative example 9 | B | NG-1 | D | C | D | C |

Embodiments of the thermal transfer sheet according to the present invention are defined in the claims.

### Reference Signs List

10 thermal transfer sheet, 11 substrate, 12 peeling layer, 13 transfer layer, 14 coloring layer, 15 protective layer, 16 adhesive layer, 17 receiving layer, 18 back layer

## Claims

1. A thermal transfer sheet (10) comprising:
a substrate (11); and a transfer layer (13),
wherein the transfer layer (13) comprises at least a peeling layer (12), and
the peeling layer (12) contains a vinyl resin and an alcohol alkoxylate,
**characterized in that**
the alcohol alkoxylate is represented by the following general formula (1):
CₘH₂ₘ₊₁-O-(CH₂CH₂O)ₙ-H (1)
wherein m denotes an integer in the range of 30 to 53, n denotes an integer in the range of 2 to 100, and n/m is 3.0 or less.

2. The thermal transfer sheet (10) according to claim 1, wherein the vinyl resin is a vinyl chloride-vinyl acetate copolymer.

3. The thermal transfer sheet (10) according to claim 1, wherein an amount of the alcohol alkoxylate in the peeling layer (12) ranges from 1% to 45% by mass.

4. The thermal transfer sheet (10) according to any one of claims 1 to 3, wherein the peeling layer (12) further contains an alcohol having 18 to 80 carbon atoms.

5. The thermal transfer sheet (10) according to claim 4, wherein a ratio of an amount of the vinyl resin in the peeling layer (12) to a sum of an amount of the alcohol alkoxylate as represented by the general formula (1) and an amount of the alcohol having 18 to 80 carbon atoms in the peeling layer (12) ranges from 60/40 to 99.5/0.5 based on mass.

6. A thermal transfer sheet (10) comprising:
a substrate (11); and a transfer layer (13),
wherein the transfer layer (13) comprises at least a peeling layer (12), and
the peeling layer (12) contains a vinyl resin and an alcohol having 18 to 80 carbon atoms,
**characterized in that**
the amount of alcohol having 18 to 80 carbon atoms in the peeling layer (12) ranges from 1% to 45% by mass.

7. The thermal transfer sheet (10) according to claim 6, wherein the vinyl resin is a vinyl chloride-vinyl acetate copolymer.

8. The thermal transfer sheet (10) according to claim 6 or 7, wherein
the peeling layer (12) further contains an alcohol butoxylate.

9. The thermal transfer sheet (10) according to any one of claims 7 to 9, wherein
the alcohol having 18 to 80 carbon atoms is a linear aliphatic alcohol.

## Patentansprüche

1. Wärmeübertragungsfolie (10), aufweisend:
ein Substrat (11); und eine Transferschicht (13),
wobei die Transferschicht (13) zumindest eine Ablöseschicht (12) umfasst, und
die Ablöseschicht (12) ein Vinylharz und ein Alkoholalkoxylat enthält,
**dadurch gekennzeichnet, dass**
das Alkoholalkoxylat durch die folgende allgemeine Formel (1) dargestellt wird:
CₘH₂ₘ₊₁-O-(CH₂CH₂O)ₙ-H (1)
wobei m eine ganze Zahl im Bereich von 30 bis 53 bezeichnet, n eine ganze Zahl im Bereich von 2 bis 100 bezeichnet, und n/m 3,0 oder weniger beträgt.

2. Wärmeübertragungsfolie (10) nach Anspruch 1, wobei das Vinylharz ein Vinylchlorid-Vinylacetat-Copolymer ist.

3. Wärmeübertragungsfolie (10) nach Anspruch 1, wobei die Menge des Alkoholalkoxylats in der Ablöseschicht (12) im Bereich von 1 bis 45 Massen-% liegt.

4. Wärmeübertragungsfolie (10) nach einem der Ansprüche 1 bis 3, wobei die Ablöseschicht (12) ferner einen Alkohol mit 18 bis 80 Kohlenstoffatomen enthält.

5. Wärmeübertragungsfolie (10) nach Anspruch 4, wobei das Verhältnis einer Menge des Vinylharzes in der Ablöseschicht (12) zu einer Summe einer Menge des Alkoholalkoxylats, wie durch die allgemeine Formel (1) dargestellt, und einer Menge des Alkohols mit 18 bis 80 Kohlenstoffatomen in der Ablöseschicht (12) anhand der Masse im Bereich von 60/40 bis 99,5/0,5 liegt.

6. Wärmeübertragungsfolie (10), umfassend:
ein Substrat (11); und eine Transferschicht (13),
wobei die Transferschicht (13) zumindest eine Ablöseschicht (12) aufweist, und
die Ablöseschicht (12) ein Vinylharz und einen Alkohol mit 18 bis 80 Kohlenstoffatomen enthält,
**dadurch gekennzeichnet, dass**
die Menge an Alkohol mit 18 bis 80 Kohlenstoffatomen in der Ablöseschicht (12) im Bereich von 1 bis 45 Masse-% liegt.

7. Wärmeübertragungsfolie (10) nach Anspruch 6, wobei das Vinylharz ein Vinylchlorid-Vinylacetat-Copolymer ist.

8. Wärmeübertragungsfolie (10) nach Anspruch 6 oder 7, wobei die Ablöseschicht (12) ferner ein Alkoholbutoxylat enthält.

9. Wärmeübertragungsfolie (10) nach einem der Ansprüche 7 bis 9, wobei der Alkohol mit 18 bis 80 Kohlenstoffatomen ein linearer aliphatischer Alkohol ist.

## Revendications

1. Feuille de transfert thermique (10) comprenant :
un substrat (11) ; et une couche de transfert (13),
dans laquelle la couche de transfert (13) comprend au moins une couche pelable (12), et
la couche pelable (12) contient une résine vinylique et au moins un alcoxylate d'alcool,
**caractérisée en ce que**
l'alcoxylate d'alcool est représenté par la formule générale (1) suivante :
CₘH₂ₘ₊₁-O-(CH₂CH₂O)ₙ-H (1)
dans laquelle m décrit un nombre entier compris dans la plage allant de 30 à 53, n décrit un nombre entier compris dans la plage allant de 2 à 100, et n/m est inférieur ou égal à 3,0.

2. Feuille de transfert thermique (10) selon la revendication 1, dans laquelle la résine vinylique est un copolymère de chlorure de vinyle-acétate de vinyle.

3. Feuille de transfert thermique (10) selon la revendication 1, dans laquelle une quantité de l'alcoxylate d'alcool dans la couche pelable (12) est comprise dans la plage allant de 1 % à 45 % en masse.

4. Feuille de transfert thermique (10) selon l'une quelconque des revendications 1 à 3, dans laquelle
la couche pelable (12) contient en outre un alcool ayant de 18 à 80 atomes de carbone.

5. Feuille de transfert thermique (10) selon la revendication 4, dans laquelle un rapport d'une quantité de résine vinylique dans la couche pelable (12) à une somme d'une quantité de l'alcoxylate d'alcool représenté par la formule générale (1) et d'une quantité de l'alcool ayant de 18 à 80 atomes de carbone dans la couche pelable (12) est compris dans la plage allant de 60/40 à 99,5/0,5 en fonction de la masse.

6. Feuille de transfert thermique (10) comprenant :
un substrat (11) ; et une couche de transfert (13),
dans laquelle la couche de transfert (13) comprend au moins une couche pelable (12), et
la couche pelable (12) contient une résine vinylique et un alcool ayant de 18 à 80 atomes de carbone,
**caractérisée en ce que**
la quantité d'alcool ayant de 18 à 80 atomes de carbone dans la couche pelable (12) est comprise dans la plage allant de 1 % à 45 % en masse.

7. Feuille de transfert thermique (10) selon la revendication 6, dans laquelle la résine vinylique est un copolymère de chlorure de vinyle-acétate de vinyle.

8. Feuille de transfert thermique (10) selon la revendication 6 ou 7, dans laquelle
la couche pelable (12) comprend en outre un butoxylate d'alcool.

9. Feuille de transfert thermique (10) selon l'une quelconque des revendications 7 à 9, dans laquelle l'alcool ayant de 18 à 80 atomes de carbone est un alcool aliphatique linéaire.
